# EUROPÄISCHE PATENTSCHRIFT

(11) **EP 2 884 190 B1**
(45) Veröffentlichungstag und Bekanntmachung des Hinweises auf die Patenterteilung: **13.07.2016**
(21) Anmeldenummer: 14196407.2
(22) Anmeldetag: 04.12.2014
(51) Int. Cl.: F24D 19/08, F24D 19/10, B01D 19/00

(54) **Verfahren und Vorrichtung zur Entgasung eines Mediums in einem Kreislauf**
Method and apparatus for degassing a medium in a circuit
Procédé et dispositif de dégazage d'un milieu dans un circuit

(30) Priorität: 16.12.2013 CH 20752013
(43) Veröffentlichungstag der Anmeldung: 17.06.2015
(73) Patentinhaber: Disgas GmbH, 4434 Hölstein (CH)
(72) Erfinder: Friedrich, Helmut, 4410 Liestal (CH)
(74) Vertreter: Felber, Josef

(56) Entgegenhaltungen:
- EP-A1- 0 652 406
- EP-A2- 0 933 109
- WO-A1-2010/011130
- US-A1- 2007 140 916

## Beschreibung

Die Erfindung betrifft ein Verfahren und eine Vorrichtung zum Entgasen eines Mediums in einer Heizanlage, Kühlanlage oder einer Erdsonden-Wärmepumpe. Die Erfindung wird am Beispiel einer Heizanlage erläutert, funktioniert jedoch in analoger Weise sowohl im Fall von Kühlanlagen als auch für Erdsonden-Wärmepumpen.

Bei einer Zentralheizung oder Sammelheizung werden über eine zentrale Heizstelle die Gebäuderäumlichkeiten mit Wärme versorgt, wobei als Trägermedium vor allem Leitungswasser zur Wärmeübertragung genutzt wird. Das Heizwasser enthält Luft, die entweder im Wasser gelöst ist oder isolierte Luftbläschen bildet. Beim Durchlaufen des Rohrsystems entstehen durch diese Gase in den Metall-Rohrleitungen Korrosionsprodukte, welche Material und Funktion einzelner Anlagenbauteile schädigen und damit letztlich die Funktion der gesamten Anlage. Überdies sind Fliessgeräusche ein Nebeneffekt von im Leitungsnetz befindlichen Gasen, was als Geräuschbelästigung empfunden wird.

Hauptnachteil von im Wasser gelösten sowie in freier Form auftretenden Gasen in der Heizanlage ist, dass Korrosionsprodukte wie z.B. Schlamm durch Zirkulationsstörungen die Wärmeübertragungsleistung an den Heizkörpern herabsetzen. Die spezifische Wärmekapazität eines Wasser-Luft - Gemisches ist wesentlich geringer als die von Wasser im entgasten Zustand. Somit wird bei steigendem Gasanteil mehr Heizleistung benötigt, damit auch die ungenügend beheizten Stellen in Wohn- oder Arbeitsräumen eine ausreichende Erwärmung erfahren. Im Fall von Bodenheizungen können sich in leicht höher gelegenen Heizschlaufen auf einem sonst ebenen Boden Gasblasen bilden, wonach an diesen Stellen der Boden weit weniger stark beheizt wird.

Abhilfe schaffen beispielsweise Entgasungsanlagen oder Entlüfter, die zentral vorzugsweise an der tiefsten Stelle des Heizkreislaufs eingebaut werden, oder die lokal an den einzelnen Heizkörpern angebracht werden. Bei grösseren Anlagen kommen selbsttätige Entlüfter zum Einsatz, sogenannte Luftblasenabscheider, welche die Gase kontinuierlich aus der flüssigkeits- und dampfführenden Anlage ausscheiden. Für im Wasser gelöste Gase werden Druckstufenentgasungs-Verfahren angewandt, wobei hier zunutze gemacht wird, dass Wasser abhängig von Druck und Temperatur einen bestimmten Gasanteil aufnehmen kann, was durch eine nach dem Gasgesetz von Henry formulierten Gassättigungskurve beschrieben wird. Bei gleichbleibender Temperatur werden infolge von Druckerniedrigung die im Wasser gebundenen Gase ausgeschieden.

Bei den bisherigen Heizwasserentgasungs-Vorrichtungen besteht die grösste Herausforderung in der Grösse des jeweiligen Entgasungsbehälters. Je grösser dieser Behälter ist, desto erheblicher wirken sich auch die Druckschwankungen aus, denen das System ausgesetzt ist. Letztere muss man dann umständlich mit zusätzlichen Apparaturen ausgleichen.

Aus EP 1 262 720 B1 bekannt ist eine Vorrichtung zum Entgasen von Flüssigkeiten in einem geschlossenen oder offenen Kreislauf zur bedarfsweise kontinuierlichen Entgasung des Heizmediums in einer Heizanlage. Gemäss diesem Patent wird das Heizwasser über eine Umwälzpumpe in den Entgasungsbehälter angesaugt und entgast, wonach die freien Gase über einen Entlüfter in die Umgebung entlassen werden und das entgaste Wasser in den Kreislauf zurückgespiesen wird. Die Vorrichtung zeichnet sich dadurch aus, dass die einzige Zuleitung vom Kreislauf in den Entgasungsbehälter aus einer Leitung besteht, die in der oberen Hälfte des Entgasungsbehälters über eine Injektordüse in dessen Inneres mündet, und eine Gasleitung in einen nebenstehenden Wasserbehälter führt, der einen vertikal beweglich gelagerten Schwimmer enthält. Diese Vorrichtung kommt als Besonderheit ohne Regelventile aus. Der Entgasungsbehälter misst im Innendurchmesser bloss 72mm und in der Länge bloss 190mm, mit einem Inhalt von ca. 0.5 bis 0.7 Litern. Zur Entgasung wird im Entgasungsbehälter ein Unterdruck von -0.2 bar bis -0.5 bar benötigt. Um den Druck nicht unter -0.5 bar absinken zu lassen, wird die Pumpe über eine elektronische Steuerungseinheit nach Unterschreiten dieses Druckminimums zeitverzögert abgeschaltet. Ein normaler Entgasungszyklus besteht aus einer einstellbaren Pumpenlaufzeit von 3.5 Minuten und einer gleichfalls einstellbaren Stillstandzeit von 1.5 Minuten. Im eingeschalteten Zustand fördert die Pumpe Wasser aus dem Entgasungsbehälter, wodurch in diesem ein Unterdruck entsteht. Sobald ein Druckunterschied zwischen dem Innern des Entgasungsbehälters und dem Anlagensystem entstanden ist, beginnt das Wasser in der Ansaugleitung über die Injektordüse in den Entgasungsbehälter nachzuströmen, um dort durch die im Unterdruck erwirkte Gasübersättigung auszugasen. Da infolge der Pumpenleistung mehr Wasser aus dem Entgasungsbehälter abgesaugt wird als Wasser durch die Injektordüse einströmt, wird der Unterdruck im Entgasungsbehälter systematisch erniedrigt, jedoch nie unter das einstellbare Druckminimum. Nach Abstellen der Umwälzpumpe fliesst aufgrund des immer noch vorhandenen Unterdrucks weiteres Heizwasser über die Injektordüse in den Entgasungsbehälter nach, was den Druck kontinuierlich erhöht. Sobald ein Druck von +0.01 bar im Entgasungsbehälter überschritten wird, werden sämtliche freien Gase über einen Entlüfter und eine Gasleitung in den nebenstehenden Wasserbehälter geleitet. Dabei drückt es den im Behälter befindlichen Schwimmkörper nach unten, selbst bei sehr kleinen Gasmengen. Diese Bewegung des Schwimmkörpers wird mittels eines Kontaktschalters registriert und misst somit laufend die Volumina der ausgeschiedenen Gase. Die Gasmessung zeigt an, wann die Entgasungsvorrichtung das Heizwasser im Anlagesystem zur Genüge entgast hat bzw. wann ein kritischer Gasgehalt pro Pumpenlaufzeit unterschritten wird, wodurch die Pumpe bis zum nächsten Einsatz abgeschaltet werden kann.

Ein wesentlicher Nachteil der oben erwähnten Vorrichtung ist die relative Unexaktheit bei der Bestimmung des Gasgehalts im Medium via dem kalibrierten Schwimmer. Jede indirekte Messung führt zwangsläufig zu einer Einbusse an theoretisch möglicher Effizienz. Dies wiederum resultiert in einem unnötig hohen Energieverbrauch. Zudem ist die regelmässige Überprüfung des Gasgehaltes im Heiz- oder Kühlsystem oder in Erdsonden-Wärmepumpenanlagen mit entsprechendem Aufwand an Steuerungs- und Regeleinrichtungen verbunden und somit zeit- und kostspielig. Weiter ist die in [0006] erwähnte Vorrichtung mit einem Entgasungsbehälter von ca. 0.7 Litern immer noch relativ gross, wenngleich sehr viel kompakter als gebräuchliche Entgasungsanlagen, die meist eine Grösse vergleichbar mit einem Haushalt-Kühlschrank aufweisen und entsprechend teuer in der Anschaffung und im Unterhalt sind. Aus US 2007/0140916 A1 ist eine weitere Vorrichtung zum Entgasen und aus EP 0652406 B1 eine Vorrichtung sowie ein Verfahren zum Entgasen von Flüssigkeiten in einem Kreislauf bekannt. Dabei durchlaufen diese Systeme über eine definierte Zeitperiode ablaufende Entgasungszyklen. Während der Entgasungszyklen wird der Druck in den jeweiligen Entgasungsbehältern variiert, indem durch Zufuhr von Flüssigkeit unter gleichzeitigem Abpumpen von Flüssigkeit aus dem Behälter durch eine Abführpumpe der Druck wechselweise zwischen zwei Druckwerten zum Schwanken gebracht wird. Dabei werden die ausgegasten Gase systematisch mit Öffnen eines Ventils nach aussen abgeführt. Der grosse Nachteil aber, nämlich dass die effektive Einsatzzeit des Systems mit seinen typischen Entgasungszyklen manuell eingegeben bzw. aus Erfahrungswerten bestimmt werden muss, bleibt bestehen. Diese Entgasungssysteme laufen während fix eingestellten Perioden, z.B. jede Woche oder jeden Monat, unabhängig davon, ob eine Entgasung nötig ist oder nicht. Sie zeigen keinen bestimmten Entgasungsgrad an. Vielmehr muss dieser eigens gemessen werden. Es sind also Kontrollen zur Ermittlung des Gasgehalts der betreffenden Flüssigkeit weiterhin vonnöten, was stets mit Aufwand verbunden ist. Eine Arbeitsfachkraft muss vor Ort erscheinen und eine Messung vornehmen. Auch kann ein System auf diese Weise nicht die maximale Entgasungsleistung erbringen, da seine Einsatzzeiten durch Kontrollen bzw. Erfahrungswerte vorgegeben, und nicht durch die jeweils tatsächlich vorliegenden Werte der Entgasung bestimmt sind. Diese Entgasungsgeräte stellen auch nicht eigenständig ab, sobald ein gewünschter Entgasungsgrad erreicht ist. Es ist daher unvermeidlich, dass sie manchmal zu wenig entgasen und ein anderes Mal weiterlaufen, obwohl es nicht mehr nötig wäre.

Es ist deshalb die Aufgabe der vorliegenden Erfindung, die oben genannten Nachteile zu überwinden und ein Verfahren zum Entgasen eines Mediums in Heizanlagen, Erdsonden-Wärmepumpanlagen und Kühlanlagen in einem Kreislauf zu schaffen, welches eine höhere Entgasungsleistung als mit der in EP 1 262 720 B1 beschriebenen Vorrichtung erbringt. Das Verfahren soll den Gasgehalt im System auf einen sehr niedrigen Rest-Gasgehalt von 10ml bis 15ml pro Liter senken, wodurch der Energieverbrauch im System um ca. 10% verringert wird.

Eine weitere Aufgabe der Erfindung ist es, ein Verfahren zu schaffen, bei dem die Apparatur in einfachster Weise selbstregulierend arbeiten kann und dabei die maximale Gasmenge gefördert wird.

Weiter ist es auch eine Aufgabe der Erfindung, eine Vorrichtung zum Entgasen von Flüssigkeiten anzugeben, die konstruktiv noch einfacher und wesentlich kompakter gestaltet ist und kostengünstiger im Unterhalt des Systems ist, und die nicht zuletzt eine längere Lebensdauer gewährleistet.

Die Aufgabe wird gelöst von einem Verfahren zur Entgasung von Heiz- und Kühlflüssigkeiten in einem Kreislauf, bei dem das Medium im Kreislauf in einer Entgasungsanlage entgast wird, indem das Medium durch eine Injektordüse in einen Entgasungsbehälter einströmt, in dem mittels Abpumpen der Flüssigkeit mit einer Pumpe ein Unterdruck gegenüber dem Druck im Kreislauf erzeugt wird, wodurch die Freisetzung der in der Flüssigkeit gebundenen Gase innerhalb des Entgasungsbehälters erfolgt, wobei sich das Verfahren dadurch auszeichnet, dass der Druck im teilevakuierten Entgasungsbehälter variiert wird und dabei eine Zeitperiode der Druckänderung gemessen wird und diese Zeitperiode als Mass für die Entgasung interpretiert wird.

Des Weiteren wird die Aufgabe gelöst von einer Vorrichtung zur Entgasung von Medium in einem Kreislauf, bestehend aus einem Entgasungsbehälter im Kreislauf des zu entgasenden Mediums, mit einem Drucksensor zur Messung seines Innendruckes, einer Injektordüse, die aus dem Kreislauf in das Innere des Entgasungsbehälters mündet, sowie einer Pumpe zum Abpumpen von Flüssigkeit aus dem Entgasungsbehälter zur Erstellung eines Unterdruckes gegenüber dem Druck im Kreislauf, und einem oberhalb des Entgasungsbehälters befindlichen Entgasungsstutzen mit Entlüfter und einem an die Entgasungsleitung angebauten Ventil, wobei sich die Vorrichtung dadurch auszeichnet, dass eine elektronische Steuerungseinheit mit einem Zeitelement vorhanden ist, mit welcher Zeitintervalle zwischen vom Drucksensor gemessenen Druckwerten messbar sind, und dass die Zufuhr von Medium in den Entgasungsbehälter variierbar ist, sodass bei laufender Pumpe der Druck im Entgasungsbehälter durch Steuerung der Zufuhr von Medium variierbar ist.

Das Verfahren wird anhand dieser Vorrichtung nachfolgend anhand der Zeichnungen im Einzelnen beschrieben und seine Durchführung bzw. sein Verfahrensablauf wie auch die Funktion der einzelnen Teile der Vorrichtung werden erläutert.

Es zeigt:
- Figur 1:: Die schematische Darstellung der Vorrichtung von der Seite her gesehen;
- Figur 2:: Den Druckverlauf sowie Öffnungs- und Schliessintervalle der beiden Magnetventile sowie Lauf- und Stillstandzeiten der Pumpe über einen Entgasungszyklus schematisch dargestellt.

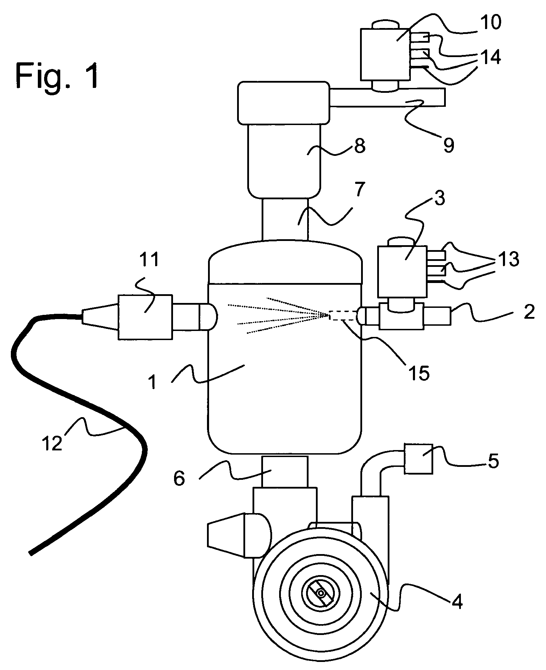

Die Figur 1 zeigt die wesentlichen Elemente der Vorrichtung für den Betrieb dieses Verfahrens. Der Entgasungsbehälter 1 der Vorrichtung hat die Form eines aufrechten Zylinders, der hier von der Seite her gesehen schematisch dargestellt ist. Der Entgasungsbehälter 1 weist ein Volumen von bloss etwa zwei Dezilitern auf. Eine Pumpe 4 mit einer Fördermenge von beispielsweise 60 l/h ist in seine untere Abflussleitung 6 eingebaut, welche das entgaste Medium über eine Druckleitung 5 aus dem Entgasungsbehälter 1 abpumpt und zurück in den Kreislauf befördert. Die Pumpe 4 vermag den Druck im Entgasungsbehälter auf - 0.9 bar zu reduzieren, wobei aber vorzugsweise in einem Druckbereich zwischen - 0.35 bar und -0.7 bar gearbeitet wird, in dem noch keine Kavitäten in der Pumpe 4 auftreten. In der Pumpe 4 integriert ist eine Bypassleitung parallel zur Pumpe 4 angeordnet. Über diese wird der Pumpenförderstrom aufgeteilt in den Nutzförderstrom, der in den Heiz- oder Kühlkreislauf fliesst, und in den Bypassförderstrom, der direkt auf die Ansaugseite der Pumpe 4 zurückgeführt ist. Durch Änderung des Bypassförderstromes mittels einer Sicherheitseinrichtung kann der Nutzförderstrom variiert werden. Damit kann man die Nettoförderleistung der Entgasungsanlage an den Anlagendruck automatisch anpassen, wodurch die Druckschwankungen durch das Zusammenspiel von regulierter Pumpenleistung und Magnetventilfunktion im Entgasungsbehälter 1 während der Entgasung zur Kompensation des sinkenden Anlagendrucks gewährleistet sind. Zudem wird mit dem Bypassstrom ein Trockenlaufen der Pumpe 4 verhindert. Die Zufuhrleitung 2 aus dem Heiz-, Kälte- oder Erdsonden-Wärmepumpen-Kreislauf führt über das spezielle Magnet-Regelventil 3 mit einer Ventilöffnung von zum Beispiel 1mm² Durchmesser in das Innere des Entgasungsbehälters 1, in dessen obere Hälfte. Je nach Ausführung der Vorrichtung reguliert das Magnetventil 3 mit elektrischen Anschlüssen 13 die Mediumzufuhr entweder durch zusätzliches Öffnen seiner Ventilöffnung, womit sich der Durchgangsstrom vergrössert, oder aber es ist parallel zur Injektordüse 15 eine weitere Zufuhrleitung angebracht, die vom Magnetventil 3 geschlossen oder freigegeben wird und somit einen Paralleldurchgangsstrom erzeugen kann. Oben am Entgasungsbehälter 1 befindet sich der Entgasungsstutzen 7, mit einem standardmässigen Entlüfter 8 und einem in ihn eingebauten Schwimmer, mittels dessen ein Ventil betätigbar ist, sodass bei ansteigendem Flüssigkeitspegel im Entlüfter 8 kein Wasser durch das Ventil und die Abgasleitung 9 ausströmen kann. Die ausgeschiedenen Gase sammeln und verdichten sich im oberen Teil des Entgasungsbehälters 1 und im Entlüfter 8 bis hin zum angebauten Magnetventil 10, welches über die Elektronik, via den elektrischen Anschlüssen 14, gesteuert wird. Das Magnetventil 10 dichtet im geschlossenen Zustand den während der Entgasung erzeugten Unterdruck in der Entgasungsvorrichtung vollständig ab. Erst nach Öffnen des Magnetventils 10 können die freien Gase nach Erreichen eines leichten Überdruckes gegenüber der Atmosphäre über die Entgasungsleitung 9 in die Umgebung ausgeschieden werden.

Weiter findet man am Entgasungsbehälter 1 auf derselben Höhe wie die Zufuhrleitung 2, jedoch abseits der Strahlrichtung des eingedüsten Mediums, eine Druckmess-Sonde 11 eingebaut, zur ständigen Überwachung des Druckes im Innern des Entgasungsbehälters 1. Diese ständige Überwachung des Druckbereichs während des Entgasungsprozesses verhindert ein Unterschreiten des vorgegebenen Druckminimums von -0.8 bar im Entgasungsbehälter 1, da in einem solchen Fall die Pumpe 4 gestoppt und ein Alarm ausgelöst wird. Die Druckmess-Sonde 11 liefert ihre Messdaten über die Messleitung 12 an eine elektronische Steuerungseinheit mit einem integrierten Zeitelement für die Steuerung der Pumpe 4 und der Magnetventile 3 und 10.

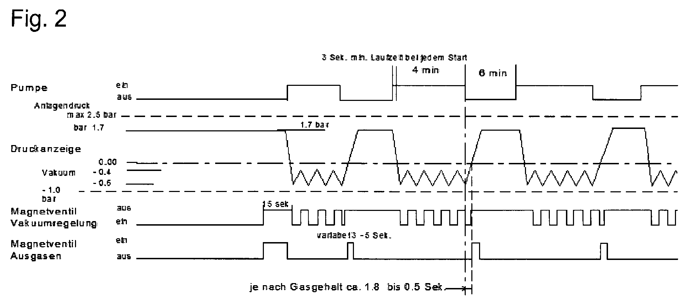

Das Verfahren wird anhand von Figur 2 erläutert, in welcher der Druckverlauf (Druckanzeige) im Entgasungsbehälter 1, Öffnungs- und Schliessintervalle der Magnetventile 3 und 10 sowie Lauf- und Stillstandzeiten der Pumpe 4, schematisch dargestellt sind. Der Start des Entgasungsvorganges erfolgt durch das Inbetriebsetzen der Pumpe 4, was im Schema mit einem Balken angezeigt ist, worauf im Entgasungsbehälter 1 befindliches Medium gegen unten abgepumpt wird, während das Medium im Kreislauf infolge der Drucksenkung im Entgasungsbehälterinnern über die Zufuhrleitung 2 angesaugt und über die Injektordüse 15 in den Entgasungsbehälter 1 eingespritzt wird. Bei fortwährendem Pumpenlauf sinkt der Druck im Innern des Entgasungsbehälters 1 kontinuierlich, wie im Diagramm gezeigt. Beim Aufprall des Wasserstrahls auf der Innenwand des Behälters 1 werden die Wasserteile fein zerstäubt und die gebundenen Gase aufgrund der Gasübersättigung im Unterdruck freigesetzt. Sobald der Drucksensor 11 das Druckminium von -0.55 bar misst, öffnet das Magnetventil 3, wie man im Diagramm anhand der Koinzidenz des ersten Minimums in der Druckanzeige mit dem ersten 'Knick' des vakuumregelnden Magnetventils 3 erkennt. Danach gelangt zusätzlich Medium entweder durch die Vergrösserung der Öffnung der Injektordüse 15 oder aber durch einen parallel geöffneten Zufuhrkanal in den Entgasungsbehälter 1. Infolge dieser wesentlich gesteigerten Mediumzufuhr auf etwa die doppelte Menge oder mehr nimmt der Druck im Entgasungsbehälter 1 trotz der fortwährenden Pumpenaktivität wieder zu, die Druckkurve steigt im Diagramm an, was bedeutet, dass der Unterdruck gegenüber dem Atmosphärendruck wieder geringer wird. Sobald der Drucksensor 11 den eingestellten oberen Druckwert von -0.35 bar detektiert, wird das Magnetventil 3 über die elektronische Steuerungseinheit erneut geschlossen und fortan wird wieder einzig durch die normal eingestellte Injektordüse 15 eingespritzt. Weil deshalb weniger Medium in den Entgasungsbehälter 1 gelangt als durch die kontinuierlich laufende Pumpe 4 abgesaugt wird, senkt sich der Druck erneut bis auf -0.55 bar, wonach das Magnetventil 3 wiederum öffnet etc. Die Dauer dieses Vorgangs hängt ab von der Grösse und Beschaffenheit einer Anlage. Sobald die Pumpe 4 initial eingeschaltet wird, was etwa alle paar Wochen erfolgt, laufen die Entgasungszyklen ab. Bei hoher Gassättigung im Kreislaufmedium sinkt der Pegel im Entgasungsbehälter 1 entsprechend tief im Verlauf eines Entgasungszyklus ab. Jedoch reduziert sich durch die stetige Umwälzung des Kreislaufmediums der Gasgehalt im zuströmenden Medium, bis sich der Pegel im Entgasungsbehälter 1 pro Druckauf- und Druckabbauphase nur noch um ein Minimum verändert. Entsprechendes gilt auch für die Zeit dieser Intervalle. Daher lässt sich eine erfolgreiche Entgasung des Mediums auf die Messung einer Zeitperiode reduzieren. Bei einem reibungslosen, einmal initiierten Verfahrensdurchgang für die Entgasung durch Einschalten der Pumpe 4 arbeitet diese in eingestellten Intervallen (Laufzeit - Stillstand - Laufzeit - etc.) ohne Unterbruch bis zum Abschalten der Entgasungsanlage infolge des erreichten minimalen Gaswertes im Medium, und bleibt bis zu deren erneuter Aktivierung in der Überwachungszeit ausgeschaltet. Durch dieses Entgasungs-Verfahren wird der Gasanteil einer Anlage um 10 ml/Liter bis 15 ml/Liter heruntergesetzt (ein Gewässer bei einer Temperatur von 20°C hat einen Gasanteil von exakt 18 ml/Liter). Durch diesen tiefen Gasanteil wird eine 10%ige Einsparung der Energiekosten erzielt.

Das System durchläuft gerade so viele solcher Pumpenlauf-Zyklen, bis das Medium im Kreislauf vollständig entgast ist. Dieser Sachverhalt wird dadurch erkannt, dass die Zeitperiode Δt zwischen dem Abschalten der Pumpe 4 im ersten einstellbaren Druckminimum nach Ablauf der einstellbaren mehrminütigen Pumpenlaufzeit und dem Öffnen des Magnetventils 10 zur Entlassung der nunmehr freien Gase in die Atmosphäre bei z.B. +0.05 bar von der elektronischen Steuerungseinheit gemessen und mit dem eingestellten Ausschaltwert verglichen wird. Wenn das gemessene Zeitintervall Δt diesen kritischen Zeitwert unterschreitet, so ist der Gasanteil im Medium minimal und die Pumpe 4 wird bis zur nächsten Aktivierung der Entgasungsanlage für 3 bis 4 Wochen abgeschaltet.

Die Magnetventile 3 und 10 sind die zentralen Regelorgane der Vorrichtung. Das System beurteilt anhand einer einfachen Messung, wann die Entgasung des Kreislaufmediums abgeschlossen ist. Da der Indikator hierfür ein kritisches Zeitintervall zwischen zwei Druckpunkten und folglich eine systeminhärente Grösse ist, geschieht diese Messung in direkter und verlässlicher Weise, und nicht über eine Zweitanlage, wie das bisher umständlich der Fall war. Das Verfahren ermöglicht somit die Entgasung einer komplexen Heiz-, Kühl- oder Wärmepumpenanlage mittels einer kleinen, höchst kompakten Vorrichtung, die keine der Nachteile grosser Apparaturen hat wie beispielsweise deren Empfindlichkeit gegenüber Druckschwankungen, damit einhergehende Wartungsarbeiten, kostspielige Ersatzteileinbauten, Austausch von Regelorganen etc.

### Ziffernverzeichnis

- 1: Entgasungsbehälter
- 2: Zufuhrleitung aus Kreislauf
- 3: Magnetventil neben Injektordüse
- 4: Pumpe
- 5: Rückführleitung in den Kreislauf
- 6: Abführstutzen zur Pumpe
- 7: Gasablass-Stutzen
- 8: Entlüfter
- 9: Entgasungsleitung in die Umgebung
- 10: Magnetventil in Entgasungsleitung
- 11: Drucksensor
- 12: Messdatenleitung
- 13: Elektrische Anschlüsse Magnetventil 3
- 14: Elektrische Anschlüsse Magnetventil 10
- 15: Injektordüse

## Patentansprüche

1. Verfahren zur Entgasung von Heiz- und Kühlflüssigkeiten in einem Kreislauf, bei dem das Medium im Kreislauf in einer Entgasungsanlage entgast wird, indem das Medium durch eine Injektordüse (15) in einen Entgasungsbehälter (1) einströmt, in dem mittels Abpumpen der Flüssigkeit mit einer Pumpe (4) ein Unterdruck gegenüber dem Druck im Kreislauf erzeugt wird, wodurch die Freisetzung der in der Flüssigkeit gebundenen Gase innerhalb des Entgasungsbehälters (1) erfolgt, ***dadurch gekennzeichnet,* dass** der Druck im teilevakuierten Entgasungsbehälter (1) variiert wird und dabei eine Zeitperiode der Druckänderung gemessen wird und diese Zeitperiode als Mass für die Entgasung interpretiert wird.

2. Verfahren zur Entgasung von Heiz- und Kühlflüssigkeiten in einem Kreislauf nach Anspruch 1, ***dadurch gekennzeichnet,* dass** während einer einstellbaren Pumpenlaufzeit im Entgasungsbehälter (1) unterhalb des Kreislaufdrucks zwischen einem wiederholend erzeugten einstellbaren Druckminimum und Druckmaximum entgast wird und nach Ablauf der Pumpenlaufzeit die Pumpe (4) beim Erreichen des nächsten Druckminimums abstellt, wonach der Druck im Entgasungsbehälter (1) über den Atmosphärendruck ansteigt und das zugehörige Zeitintervall Δt dieses Druckanstiegs gemessen wird, und danach die freigesetzten Gase ausgeschieden werden, und die Pumpe (4) nur dann für einen nächsten Entgasungszyklus wieder eingeschaltet wird, wenn das gemessene Zeitintervall Δt einen einstellbaren kritischen Zeitwert überschreitet, ansonsten die Pumpe (4) bis zur erneuten Aktivierung bei Entgasungsbedarf des Mediums still liegt.

3. Verfahren nach Anspruch 1, ***dadurch gekennzeichnet,* dass** bei kontinuierlich laufender Pumpe (4) ein Unterdruck im Entgasungsbehälter (1) unterhalb des Kreislaufdrucks wiederholend bis zu einem Minimalwert erzeugt wird, indem Medium einzig durch die Injektordüse (15) einströmt, während die Pumpenleistung diese zugeführte Menge mehr als zu kompensieren vermag und folglich der Druck im Entgasungsbehälter (1) sinkt, und bei Erreichen des Minimaldrucks eine zur Injektordüse (15) parallele Zufuhr öffnet oder aber sich die Öffnung der Injektordüse (15) vergrössert, wodurch zusätzliches Medium in den Entgasungsbehälter (1) einströmt, wodurch die Pumpenleistung überkompensiert wird und der Druck zu einem einstellbaren höheren Druck ansteigt, nach dessen Erreichen die parallele Zufuhr schliesst bzw. die Düsenöffnung auf Normalgrösse reduziert wird, und dieser Druckabbau und - aufbau kontinuierlich andauert, bis die Pumpe (4) nach einer einstellbaren Laufzeit bei einem Druckminimum abstellt und das aufgrund der vergrösserten Zufuhr einströmende Medium den Druck im Entgasungsbehälter (1) bis auf einen einstellbaren Überdruck erhöht, wobei die Zeitperiode Δt zwischen dem Zeitpunkt des Abschalten der Pumpe (4) bis zum Erreichen dieses Überdrucks gemessen wird, und die angesammelten Gase bei besagtem Überdruck über das Magnetventil (10) ausgeschieden werden, wobei die Pumpe (4) nur dann wieder eingeschaltet wird, wenn das Zeitintervall Δt einen einstellbaren kritischen Zeitwert überschreitet, ansonsten die Pumpe (4) still liegt.

4. Verfahren nach Anspruch 1, ***dadurch gekennzeichnet,* dass** die Drucke über einen in den Entgasungsbehälter (1) ragenden Drucksensor (11) gemessen werden und der Unterdruck im Entgasungsbehälter (1) mittels eines Magnetventils (3) gesteuert wird, das entweder die Öffnung der Injektordüse (15) vergrössert und verkleinert oder einen zusätzlichen parallelen Einlass freigibt oder schliesst.

5. Verfahren nach einem der vorangehenden Ansprüche, ***dadurch gekennzeichnet,* dass** nach Ablauf der eingestellten Laufzeit die Pumpe (4) in dem zyklisch durchlaufenen Druckminimum von -0.55 bar abschaltet, worauf der Druck im Entgasungsbehälter (1) auf einen Überdruck von +0.05 bar ansteigt, wonach ein Magnetventil (10) oberhalb des Entgasungsbehälters (1) zur Entgasung für 3 bis 5 Sekunden geöffnet und hernach wieder geschlossen wird, worauf das Entgasungsverfahren erneut durchgeführt wird, sobald die Pumpe (4) ihre Pumpenaktivität wieder aufnimmt.

6. Verfahren nach einem der vorangehenden Ansprüche, ***dadurch gekennzeichnet,* dass** die einstellbaren Werte für den Drucktiefpunkt sowie für den einstellbaren höheren Druck zwischen -0.6 bar und -0.3 bar liegen.

7. Verfahren nach einem der vorangehenden Ansprüche, ***dadurch gekennzeichnet,* dass** die Pumpenlauf- sowie ihre Stillstandzeit während des Entgasungsvorgangs variabel einstellbar ist.

8. Vorrichtung zur Entgasung von Medium in einem Kreislauf laut dem Verfahren nach einem der Ansprüche 1-7, bestehend aus einem Entgasungsbehälter (1) im Kreislauf des zu entgasenden Mediums, mit einem Drucksensor (11) zur Messung seines Innendruckes, einer Injektordüse (15), die aus dem Kreislauf in das Innere des Entgasungsbehälters (1) mündet, sowie einer Pumpe (4) zum Abpumpen von Flüssigkeit aus dem Entgasungsbehälter (1) zur Erstellung eines Unterdruckes gegenüber dem Druck im Kreislauf, und einem oberhalb des Entgasungsbehälters (1) befindlichen Entgasungsstutzen (7) mit Entlüfter (8) und einem an die Entgasungsleitung (9) angebauten Ventil, ***dadurch gekennzeichnet,* dass** eine elektronische Steuerungseinheit mit einem Zeitelement vorhanden ist, mit welcher Zeitintervalle zwischen vom Drucksensor gemessenen Druckwerten messbar sind, und dass durch die steuerungseinheit die Zufuhr von Medium in den Entgasungsbehälter (1) variierbar ist, sodass bei laufender Pumpe (4) der Druck im Entgasungsbehälter (1) durch Steuerung der Zufuhr von Medium variierbar ist.

9. Vorrichtung zur Entgasung von Medium in einem Kreislauf nach Anspruch 8, ***dadurch gekennzeichnet,* dass** die Injektordüse (15) entweder eine über ein Magnetventil (3) verstellbar grosse Öffnung besitzt oder aber neben der Injektordüse (15) eine zusätzliche parallele, über ein Magnetventil (3) öffnenund schliessbare Zufuhrleitung in den Entgasungsbehälter (1) geführt ist, sodass bei laufender Pumpe (4) der Druck im Entgasungsbehälter (1) durch Steuerung der Zufuhr von Medium variierbar ist.

10. Vorrichtung zur Entgasung von Medium in einem Kreislauf nach einem der Ansprüche 8 bis 9, ***dadurch gekennzeichnet,* dass** der Entgasungsbehälter (1) ein Volumen aufweist, dass weniger als 1 Liter misst.

11. Vorrichtung zur Entgasung von Flüssigkeiten in einem Kreislauf nach einem der Ansprüche 8 bis 10, ***dadurch gekennzeichnet,* dass** im oberen Bereich des Entgasungsbehälters (1) dieser in einen Entgasungsstutzen (7) und Entlüfter (8) führt, von wo eine mittels eines Magnetventils (10) öffnen- und schliessbare Abgasleitung (9) ins Freie führt.

12. Vorrichtung zur Entgasung von Flüssigkeiten in einem Kreislauf nach einem der Ansprüche 8 bis 11, ***dadurch gekennzeichnet,* dass** im Entlüfter (8) ein Schwimmer angeordnet ist, mittels dessen ein Ventil betätigbar ist, sodass bei ansteigendem Flüssigkeitspegel im Entlüfter (8) kein Wasser durch das Ventil und die Abgasleitung (9) ausströmen kann.

13. Vorrichtung zur Entgasung von Flüssigkeiten in einem Kreislauf nach einem der Ansprüche 8 bis 12, ***dadurch gekennzeichnet,* dass** die Pumpe (4) durch die elektronische Steuerung ein- und ausschaltbar ist.

14. Vorrichtung zur Entgasung von Flüssigkeiten in einem Kreislauf nach einem der Ansprüche 8 bis 13, ***dadurch gekennzeichnet,* dass** die Pumpe (4) eine integrierte Bypassleitung parallel zur Pumpe (4) angeordnet aufweist, wodurch sich der Pumpenförderstrom aufteilt in einen Nutzförderstrom, der in die Anlage fliesst, und in einen Bypassförderstrom, der direkt auf die Ansaugseite der Pumpe (4) zurückgeführt ist.

## Claims

1. A method for degassing heating and cooling fluids in a circuit, with which the medium in the circuit is degassed in a degassing facility, by way of the medium flowing through an injector nozzle (15) into a degassing container (19), and by way of a vacuum compared to the pressure in the circuit being produced by way of evacuating the fluid with a pump (4), by which means the release of the gases bound in the fluid is effected within the degassing container (1), **characterised in that** the pressure in the part-evacuated degassing container (1) is varied, and thereby a time period of the pressure change is measured and this time period is interpreted as a measure for the degassing.

2. A method for degassing heating and cooling fluids in a circuit according to claim 1, **characterised in that** one degases in the degassing container (1) below the circuit pressure between a repeatedly produced, settable pressure minimum and pressure maximum, during a settable pump running time, and the pump (4) is switched off on reaching the next pressure minimum after completion of the pump running time, whereupon the pressure in the degassing container (1) increases beyond the atmospheric pressure and the associated time interval Δt of this pressure increase is measured, and the released gases are thereafter separated away, and the pump (4) is only switched on again for the next degassing cycle when the measured time interval Δt exceeds a settable critical time value, and otherwise the pump (4) is at standstill until the renewed activation given a need for the medium to be degassed.

3. A method according to claim 1, **characterised in that** a vacuum in the degassing container (1) below the circuit pressure is repeatedly produced down to a minimal value given a continuously running pump, by way of the medium flowing in solely through the injector nozzle (15), whilst the pump power is capable of more than compensating this fed quantity, and as a result the pressure in the degassing container (1) drops, and on reaching the minimal pressure a feed parallel to the injection nozzle (15) opens or however the opening of the injector nozzle (15) enlarges, by which means additional medium flows into the degassing container (1), by which means the pump power is overcompensated and the pressure increases to a settable higher pressure, wherein after this higher pressure has been reached the parallel feed closes or the nozzle opening is reduced to normal size, and this pressure reduction and build-up lasts continuously until the pump (4) is switched off after a settable running time at a pressure minimum and the medium which flows in due to the increased feed increases the pressure in the degassing container (1) up to a settable overpressure, wherein the time period Δt between the point in time of switching off the pump (4) until reaching this overpressure is measured, and the collected gases at the mentioned overpressure are separated away via the magnet valve (10), wherein the pump (4) is only switched on again when the time interval Δt exceeds a settable critical time value, otherwise the pump (4) is at a standstill.

4. A method according to claim 1, **characterised in that** the pressures are measured via a pressure sensor (11) projecting into the degassing container (1), and the vacuum in the degassing container (1) is controlled by way of a magnet valve (3) which either enlarges or reduces the opening of the injector nozzle (15) or releases or closes an additional parallel inlet.

5. A method according to one of the preceding claims, **characterised in that** the pump (4) is switched off after completion of the set running time, during which the pressure minimum of -0.55 bar is cyclically run through, whereupon the pressure in the degassing container (1) increases to an overpressure of +0.05 bar, whereupon a magnet valve (10) above the degassing container (2) opens for 3 to 5 seconds for degassing and thereafter is closed again, whereupon the degassing method is carried out anew as soon as the pump (4) reassumes its pump activity.

6. A method according to one of the preceding claims, **characterised in that** the settable values for the pressure low point as well as for the settable higher pressure lie between -0.6 bar and -0.3 bar.

7. A method according to one of the preceding claims, **characterised in that** the pump running time as well as its standstill time is variably adjusted during the degassing procedure.

8. A device for degassing medium in a circuit according to the method according to one of the claims 1 to 7, consisting of a degassing container (1) in the circuit of the medium to be degassed, with a pressure sensor (11) for measuring its inner pressure, with an injector nozzle (15) which runs out of the circuit into the inside of the degassing container (1), as well as with a pump (4) for pumping away fluid out of the degassing container (1), for creating a vacuum compared to the pressure in the circuit, and with a degassing pipe piece (7) which is located above the degassing container (1) and is with a bleeder (8), and with a valve which is attached to the degassing conduit (9), **characterised in that** an electronic control unit with a time element is present, with which unit the time intervals between pressure values measured by the pressure sensor can be measured, and that the feed of medium into the degassing container (1) can be varied by the control unit, so that with a running pump (4), the pressure in the degassing container (1) is variable by way of controlling the feed of medium.

9. A device for degassing medium in a circuit according to claim 8, **characterised in that** the injector nozzle (15) either comprises a large opening which can be adjusted via a magnet valve (3), or however, apart from the injector nozzle (15), an additional parallel feed conduit which can be opened and closed via a magnet valve (3) is led into the degassing container (1), so that with a running pump (4), the pressure in the degassing container (1) can be varied by way of controlling the feed of medium.

10. A device for degassing medium in a circuit according to one of the claims 8 to 9, **characterised in that** the degassing container (1) has a volume which measures less than 1 litre.

11. A device for degassing fluids in a circuit according to one of the claims 8 to 10, **characterised in that** in the upper region of the degassing container (1), this leads into a degassing pipe piece (7) and bleeder (8), from where a discharge gas conduit leads into the open, said discharge gas conduit (8) being able to be opened and closed by way of a magnet valve (10).

12. A device for degassing fluids in a circuit according to one of the claims 8 to 11, **characterised in that** a float is arranged in the bleeder (8), by way of which float a valve can be actuated, so that no water can flow out through the valve and the discharge gas conduit (9) given a rising fluid level in the bleeder (8).

13. A device for degassing fluids in a circuit according to one of claims 8 to 12, **characterised in that** the pump (4) can be switched on and off by way of the electronic control.

14. A device for degassing fluids in a circuit according to one of the claims 8 to 13, **characterised in that** the pump (4) comprises an integrated bypass conduit arranged parallel to the pump (4), by which means the pump delivery flow divides into a utilised delivery flow which flows into the facility, and into a bypass delivery flow which is led back to the suction side of the pump (4) in a direct manner.

## Revendications

1. Procédé pour le dégazage de liquides de réchauffement et de liquides de refroidissement dans un circuit où on dégaze le médium dans un circuit dans une installation de dégazage, où le médium rentre dans un récipient (1) de dégazage par une buse d'injection (15), où on génère dans ledit récipient de dégazage au moyen d'un pompage du liquide avec une pompe (4) une sous-pression par rapport à la pression dans le circuit et/où on libère les gaz liés au liquide à l'intérieur du récipient de dégazage (1), **caractérisé en ce que** la pression dans le récipient de dégazage (1) est variée dans le récipient de dégazage (1) évacué partiellement ou **en ce qu'**on mesure une période de temps de la variation de pression et **en ce que** cette période de temps est interprétée comme mesure pour le dégazage.

2. Procédé pour le dégazage de liquides de réchauffement et de refroidissement dans un circuit selon la revendication 1, **caractérisé en ce qu'**on dégaze pendant une durée de pompage réglable dans le récipient de dégazage (1) en dessous de la pression du circuit entre un minimum de pression et un maximum de pression réglables et générés de façon répétée et/où la pompe (4) est arrêtée après avoir atteint le minimum de pression suivant et après avoir parcouru la durée de pompage, où ladite pression monte dans le récipient de dégazage (1) au-delà de la pression atmosphérique et où l'intervalle de temps associé Δt de cette montée de pression est mesuré, et/où les gaz libérés sont ensuite évacués, et/où la pompe (4) est allumée uniquement pour un cycle de dégazage suivant lorsque l'intervalle de temps mesuré Δt dépasse une valeur de temps critique réglable sinon ladite pompe (4) est arrêtée jusqu'à la nouvelle activation lorsqu'on a besoin de dégazer le médium.

3. Procédé selon la revendication 1, **caractérisé en ce qu'**une sous-pression est générée pour une pompe (4) (fonctionnant de façon continue), dans le circuit de dégazage (1) jusqu'à une valeur minimale de façon répétée en dessous de la pression du circuit, en introduisant uniquement le médium par la buse d'injection (15) lorsque la puissance de pompage peut plus que compenser cette quantité amenée et la pression baisse donc dans le récipient de dégazage (1) et ouvre une entrée qui est parallèle à la buse d'injection (15) lorsque une pression minimale est atteinte mais l'ouverture de la buse d'injection (15) s'élargie à ce moment, un medium supplémentaire rentrant en même temps dans le récipient de dégazage et la puissance de pompage est donc est donc surcompensée et la pression monte pour atteindre une pression supérieure réglable et lorsque ladite pression supérieure est atteinte, l'entrée parallèle se ferme respectivement l'ouverture de buse est réduite pour atteindre une taille normale, et cette réduction et remontée de pression dure de façon continue jusqu'à ce que la pompe (4) est arrêté après une durée de fonctionnement réglable lorsque un minimum de pression est atteinte, et le médium qui rentre en raison de la fourniture de médium plus importante augmente la pression dans le récipient de dégazage (1) jusqu'à attendre une surpression réglable, où la période de temps Δt est mesurée entre le moment de arrêt de la pompe (4) jusqu'à attendre cette surpression et où le gaz accumulé est évacué par l'électrovanne(10) lorsque ladite surpression est atteinte, où la pompe (4) est unique mis en marche lorsque l'intervalle de temps Δt dépasse une valeur de temps critique réglable sinon la pompe (4) s'arrête.

4. Procédé selon la revendication 1, **caractérisé en ce que** les pressions sont mesurés au moyen d'un capteur de pression (11) faisant saillie dans le récipient de dégazage (1), et **en ce que** la sous-pression commandés dans le récipient de dégazage (1) au moyen d'une électrovanne (3), qui augmente soit l'ouverture de la buse d'injection (15) ou diminue l'ouverture de ladite buse ou qui libère ou ferme une entrée supplémentaire parallèle.

5. Procédé selon une des revendications précédentes, **caractérisé en ce que** la pompe (4) s'arrête dans le minimum de pression de -0,55 Bar parcourue de façon cyclique dès que la durée de fonctionnement configurée est expirée, la pression dans le récipient de dégazage (1) augmentant ensuite à une surpression de +0,05 Bar, une électrovanne (10) s'ouvrant ensuite au dessus du récipient de dégazage (1) pour effectuer un dégazage pendant 3 à 5 secondes et pour fermer ensuite ladite vanne, le procédé de dégazage étant ensuite à nouveau effectué dès que la pompe (4) reprend à nouveau son activité de pompage.

6. Procédé selon une des revendications précédentes, **caractérisé en ce que** les valeurs réglables se situent pour le point le plus bas de la pression ainsi que pour la pression supérieure réglable entre -0,6 Bar und -0,3 Bar.

7. Procédé selon une des revendications précédentes, **caractérisé en ce qu'**on peut régler de façon variable le temps de fonctionnement et d'arrêt pendant le processus de dégazage.

8. Dispositif de dégazage d'un médium dans un circuit selon une des revendications 1 à 7, composé d'un récipient de dégazage (1) dans le circuit du médium à dégazer, avec un capteur de pression (11) pour mesurer la pression intérieure dudit récipient , d'une bus d'injection (15), qui débouche à partir du circuit dans l'intérieure du récipient de dégazage (1), ainsi que d'une pompe (4) pour pomper du liquide du récipient de dégazage (1) pour établir une sous-pression par rapport à la pression dans le circuit, et d'un embout de dégazage (7) avec un purgeur (8) se situant au dessus du récipient de dégazage (1), et d'une valve montée sur la conduite de de dégazage (9), **caractérisé en ce qu'**une unité de commande électronique avec un élément temporel existe, avec lequel élément on peut mesurer des intervalles de temps entre les valeurs de pression mesurées par le capteur de pression, et **en ce qu'**on peut varier au moyen de l'unité de commande la fourniture du medium dans le récipient de dégazage (1), de sorte qu'on peut varier la pression dans le récipient de dégazage en commandant la fourniture du médium lorsque la pompe (4) est en marche.

9. Dispositif de dégazage d'un médium dans un circuit selon la revendication 8, **caractérisé en ce que** la buse d'injection (15) possède soit une grande ouverture qui est réglable au moyen d'une électrovanne, ou une conduite de fourniture supplémentaire parallèle, ouvrable et pouvant être fermée au moyen d'une électrovanne, est introduite dans le récipient de dégazage se situant à coté de la buse d'injection (15), de manière à ce que la pression dans le récipient de dégazage (1) peut être variée en commandant la fourniture du médium lorsque la pompe (4) est en marche.

10. Dispositif de dégazage d'un médium dans un circuit selon une des revendications 8 à 9, **caractérisé en ce que** le récipient de dégazage (1) présente un volume en dessous d'un litre.

11. Dispositif de dégazage de liquides dans un circuit selon une des revendications 8 à 10, **caractérisé en ce que** le récipient de dégazage (1) conduit dans sa partie supérieure dans un embout de dégazage (7) et un purgeur (8), d'où une conduite de dégazage (9), qui peut être ouvert et fermé au moyen d'une électrovanne mène vers l'extérieur.

12. Dispositif de dégazage de liquides dans un circuit selon une des revendications 8 à 11, **caractérisé en ce qu'**un flotteur est disposé dans le purgeur (8) au moyen duquel on peut actionner une vanne, de manière à ce que aucun eau peut sortir a travers la vanne et la conduite de dégazage (9) lorsque le niveau de liquide augmente dans le purgeur (9).

13. Dispositif de dégazage de liquides dans un circuit selon une des revendications 8 à 12, **caractérisé en ce que** la pompe (4) peut allumée et arrêtée au moyen de la commande électronique.

14. Dispositif de dégazage de liquides dans un circuit selon une des revendications 8 à 13, **caractérisé en ce que** la pompe (4) comporte une conduite bypass intégrée qui est disposée parallèle à la pompe (4), le courant d'alimentation de la pompe se divisant dans un courant d'alimentation utile qui entre dans l'installation et un courant d'alimentation bypass qui retourne directement dans le coté d'aspiration de la pompe (4).
